# FASCICULE DE BREVET EUROPEEN

(11) **EP 2 526 151 B1**
(45) Date de publication et mention de la délivrance du brevet: **02.10.2013**
(21) Numéro de dépôt: 11705639.0
(22) Date de dépôt: 19.01.2011
(51) Int. Cl.: C08L 53/00, C08L 87/00, C08J 3/12, C08K 3/00, B29C 67/04, B29C 67/00, C08L 77/02, C08G 69/40

(54) **COMPOSITION DE POUDRE THERMOPLASTIQUE ET OBJETS TRIDIMENSIONNELS FABRIQUÉS PAR FRITTAGE D'UNE TELLE COMPOSITION**
THERMOPLASTISCHE PULVERZUSAMMENSETZUNG UND DURCH SINTERUNG EINER SOLCHEN ZUSAMMENSETZUNG HERGESTELLTE DREIDIMENSIONALE OBJEKTE
THERMOPLASTIC POWDER COMPOSITION AND THREE-DIMENSIONAL OBJECTS MANUFACTURED BY SINTERING SUCH A COMPOSITION

(30) Priorité: 19.01.2010 FR 1050329
(43) Date de publication de la demande: 28.11.2012
(73) Titulaire: Arkema France, 92700 Colombes (FR)
(72) Inventeur: FILOU, Grégory, F-27500 Manneville sur Risle (FR); MALET, Frédéric, F-76000 Rouen (FR); LEMAITRE, Arnaud, F-27450 Saint Martin - Saint Firmin (FR); MATHIEU, Cyrille, 76000 Rouen (FR)
(86) Numéro de dépôt international: PCT/FR2011/050089
(87) Numéro de publication internationale: WO 2011/089352

(56) Documents cités:
- EP-A1- 1 460 108
- EP-A1- 1 634 693
- WO-A1-2005/025839
- US-A- 6 110 411
- US-A1- 2007 132 158

## Description

La présente invention concerne une composition de poudre thermoplastique, et son utilisation dans les procédés d'agglomération de poudre, couche par couche, par fusion ou frittage pour fabriquer des objets tridimensionnels flexibles.

Par « objets flexibles » au sens de l'invention, on entend les objets qui présentent un module élastique inférieur à 1000 MPa (mesuré selon la norme ISO 527-2:93-1BA).

L'agglomération de poudres par fusion (qu'on appelle ci-après « frittage ») est provoquée par un rayonnement tel que par exemple un faisceau laser (laser sintering), un rayonnement infra rouge, un rayonnement UV ou toute source de rayonnement électromagnétique permettant de faire fondre la poudre couche par couche pour fabriquer des objets. La technologie de fabrication d'objets couche par couche est décrite notamment dans la demande de brevet WO2009138692 (pages 1 à 3). Cette technologie est généralement utilisée pour produire des prototypes, des modèles de pièces (« rapid prototyping ») ou pour produire des pièces finies en petites séries (« rapid manufacturing »), par exemple dans les domaines : automobile, nautique, aéronautique, aérospatial, médical (prothèses, systèmes auditifs, tissus cellulaires...), le textile, l'habillement, la mode, la décoration, des boîtiers pour l'électronique, la téléphonie, la domotique, l'informatique, l'éclairage. La présente invention s'intéresse plus particulièrement au marché du sport, où les polymères élastomères thermoplastiques (abrégés ci-après TPE) sont généralement choisis pour leur flexibilité, leurs propriétés dynamiques et leur résistance physico-chimique. Ces TPE sont faciles à mettre en oeuvre par les procédés conventionnels d'injection, extrusion, moulage et/ou assemblage. Les procédés de frittage couche par couche requièrent une transformation préalable de ces TPE sous forme de poudres. Ces poudres doivent être adaptées pour être mises en oeuvres dans les dispositifs de frittage et permettre la fabrication de pièces flexibles aux propriétés satisfaisantes, notamment en terme de densité. En effet, certains matériaux élaborés par frittage de poudres peuvent contenir un taux résiduel de porosité. La densité réelle du matériau est alors inférieure à sa densité théorique. La densité surfacique insuffisante du matériau se traduit également par un aspect de surface irrégulier et des arêtes imprécises de l'objet. De nombreuses propriétés (mécaniques, thermiques) de l'objet final dépendent du taux de porosité du matériau. Il est donc important de pouvoir quantifier ces paramètres en mesurant la densité réelle du matériau de l'objet obtenu par frittage.

Dans la présente description, la densité réelle d'un objet fabriqué par frittage d'une composition de poudre est comparée en pourcentage à la densité théorique (correspondant à 100%) définie comme la densité d'un objet tridimensionnel de même forme fabriqué par un procédé d'injection de la même composition. La densité est mesurée selon la norme ISO 1183.

Le document US6110411 décrit des compositions de poudres thermoplastiques utilisables dans les procédés de frittage laser. Les compositions poudres de ce document doivent avoir une température de transition vitreuse (Tg) inférieure à 50°C, un ratio en poids des blocs rigides sur les blocs souples allant de 0,7 à 20, et une taille de particules inférieure à 200 µm. Néanmoins, les pièces obtenues par frittage de ces compositions ont une résolution et une densité insuffisantes, comme évoqué dans le document WO2005025839. En effet, les pièces obtenues selon le document US6110411 présentent de nombreux « vides », et leur densité est typiquement comprise dans la gamme allant de 60 à 80% de la densité théorique, ce qui est insuffisant pour les applications visées par la présente invention.

Pour augmenter la densité des pièces obtenues par les procédés actuels de frittage de poudres TPE, les pièces doivent être soumises à une étape ultérieure d'infiltration dans les vides ou lacunes (porosité résiduelle) de la pièce, par un polymère sous forme liquide, par exemple un oligomère polyuréthane, suivie d'une étape de réticulation du polymère dans la pièce. Ces étapes ultérieures augmentent le temps et le coût de fabrication des pièces. Pour améliorer la densité des objets tridimensionnels obtenus par frittage de poudres TPE tout en évitant ces étapes ultérieures d'infiltration, le document WO2005025839 propose une composition de poudre à base de TPE de température de fusion (Tf) supérieure à 180°C. Toutefois, à l'heure actuelle, il n'existe pas d'autre alternative que l'infiltration pour augmenter la densité des objets flexibles formés par frittage de poudres à base de TPE de température de fusion inférieure à 180°C.

La présente invention a donc pour but de fournir une composition thermoplastique pulvérulente frittable de Tf inférieure à 180°C, permettant d'obtenir par frittage des objets tridimensionnels qui présentent :
- une densité supérieure à 80% de la densité théorique (densité mesurée selon la norme ISO 1183), ne nécessitant donc pas d'infiltration,
- une bonne flexibilité, c'est-à-dire un module élastique inférieur à 1000 MPa (mesuré selon la norme ISO 527-2: 93-1BA), et
- une bonne définition, à savoir un aspect de surface régulier lisse et homogène, et des arêtes précises.

La présente invention a également pour but de fournir un procédé de fabrication d'objets flexibles, denses, et de bonne résolution, directement par frittage.

La présente invention a donc pour objet une composition de poudre thermoplastique de D50 inférieure à 100 µm, comprenant :
- au moins un copolymère à blocs de température de fusion inférieure à 180°C (abrégé ci-après Tf < 180°C) ;
- de 15 à 50% en poids d'au moins une charge pulvérulente de dureté Mohs inférieure à 6 et de D50 inférieur à 20 µm ; et
- de 0,1 à 5% d'un agent d'écoulement pulvérulent de D50 inférieur à 20 µm ;
sur le poids total de la composition.

La présente invention a également pour objet un procédé de fabrication d'une composition de poudre selon l'invention, comprenant les étapes suivantes :
a) mélange par compoundage dudit au moins un copolymère à blocs de Tf < 180°C avec ladite au moins une charge ;
b) cryobroyage du mélange obtenu en a) pour obtenir une poudre de D50 inférieur à 100 µm avec un rendement supérieur à 50% ; puis
c) ajout de l'agent d'écoulement à la poudre obtenue en b).

La présente invention a encore pour objet l'utilisation de 15 à 50% en poids de charge de dureté Mohs inférieure à 6 et de D50 inférieur à 20 µm dans une poudre thermoplastique de D50 inférieur à 100 µm qui comprend au moins un copolymère à blocs, pour fabriquer par frittage un objet de densité supérieure à 80% de la densité théorique définie comme la densité d'un objet de même forme fabriqué par injection de la même composition.

Le D50 correspond à la valeur de la taille de particule qui divise la population de particules examinée exactement en deux. Autrement dit, dans la composition selon l'invention, 50% des particules ont une taille inférieure à 100 µm. Le D50 inférieur à 100 µm de la composition selon l'invention est essentiel pour obtenir un objet de définition précise, d'aspect de surface lisse et régulier. Le D50 est mesuré selon la norme ISO 9276 - parties 1 à 6 : « Représentation de données obtenues par analyse granulométrique ». Dans la présente description, on utilise un granulomètre laser (Sympatec Helos) et un logiciel (Fraunhofer) pour obtenir la distribution granulométrique de la poudre et en déduire le D50.

Par copolymère à blocs selon l'invention, on entend les polymères thermoplastiques élastomères (TPE), qui comprennent, en alternance, des blocs ou segments dits durs ou rigides (au comportement plutôt thermoplastique) et des blocs ou segments dits souples ou flexibles (au comportement plutôt élastomère). Un bloc est dit « souple » s'il présente une faible température de transition vitreuse (Tg). Par faible température de transition vitreuse, on entend une température de transition vitreuse Tg inférieure à 15 °C, de préférence inférieure à 0°C, avantageusement inférieure à -15°C, encore plus avantageusement à -30°C, éventuellement inférieure à - 50°C.

Par blocs souples ou mous envisageables dans le copolymère selon l'invention, on entend notamment ceux choisis parmi les blocs polyéther, les blocs polyester, les blocs polysiloxane, tels que les blocs polydiméthylsiloxane ou PDMS, les blocs polyoléfine, les blocs polycarbonate, et leurs mélanges. Les blocs souples envisageables sont décrits par exemple dans la demande de brevet français n° : 0950637 page 32 ligne 3 à page 38 ligne 23. A titre d'exemple, les blocs polyéthers sont choisis parmi le poly(éthylène glycol) (PEG), le poly(1,2-propylène glycol) (PPG), le poly(1,3-propylène glycol) (PO3G), le poly(tétraméthylène glycol) (PTMG), et leurs copolymères ou mélanges. De préférence, la masse molaire en nombre Mn des blocs souples selon l'invention est comprise dans la gamme allant de 250 à 5000 g/mol, de préférence de 250 à 3000 g/mol, et de préférence encore de 500 et 2000 g/ mol.

Les blocs rigides peuvent être à base de polyamide, de polyuréthane, de polyester ou d'un mélange de ces polymères. Ces blocs sont notamment décrits dans la demande de brevet français n° : 0856752. Les blocs rigides sont de préférence à base de polyamide.

Les blocs polyamide (abrégé PA) peuvent comporter des homopolyamides ou des copolyamides. Les blocs polyamide envisageables dans la composition de l'invention sont notamment ceux définis dans la demande FR0950637 de la page 27 ligne 18 à la page 31 ligne 14. De préférence, la masse molaire en nombre Mn des blocs polyamide est comprise dans la gamme allant de 400 à 20000 g/mol, de préférence de 500 à 10000 g/mol, et de préférence encore de 600 et 3000 g/mol. A titre d'exemples de blocs polyamides, on peut citer ceux comprenant au moins une des molécules suivantes: PA12, PA11, PA10.10, PA6.10, PA6, PA6/12, un copolyamide comprenant au moins un des monomères suivants : 11, 5.4, 5.9, 5.10, 5.12, 5.13, 5.14, 5.16, 5.18, 5.36, 6.4, 6.9, 6.10, 6.12, 6.13, 6.14, 6.16, 6.18, 6.36, 10.4, 10.9, 10.10, 10.12, 10.13, 10.14, 10.16, 10.18, 10.36, 10.T, 12.4, 12.9, 12.10, 12.12, 12.13, 12.14,12.16,12.18, 12.36, 12.T et leurs mélanges ou copolymères. Avantageusement, ledit au moins un copolymère à blocs comprend au moins un bloc choisi parmi : les blocs polyéther, les blocs polyester, les blocs polyamide, les blocs polyuréthane, et leurs mélanges. A titre d'exemple de copolymère à blocs durs et à blocs souples, on peut citer respectivement (a) les copolymères à blocs polyester et blocs polyéther (appelés aussi COPE ou copolyétheresters), (b) les copolymères à blocs polyuréthane et blocs polyéther (appelés aussi TPU abréviation de polyuréthanes thermoplastiques) et (c) les copolymères à blocs polyamide et blocs polyéther (appelés aussi PEBA selon l'IUPAC, ou encore polyéther-bloc-amide).

De préférence, ledit au moins un copolymère comprend un copolymère à blocs polyamide et blocs polyéther (PEBA). Avantageusement, ledit PEBA comprend du PA12-PEG, PA6-PEG, PA6/12-PEG, PA11-PEG, PA12-PTMG, PA6-PTMG, PA6/12-PTMG, PA11-PTMG, PA12-PEG/PPG, PA6-PEG/PPG, PA6/12-PEG/PPG, PA11-PEG/PPG, PA11/PO3G, PA6.10/PO3G et/ou PA10.10/PO3G.

Dans la présente description, et par convention dans domaine de la fabrication d'objets tridimensionnels par agglomération de poudre par fusion, la température de fusion (Tf) de la poudre polymère correspond à la température de fusion en première chauffe (Tf1) de la poudre. Elle est mesurée selon la norme ISO 11357-3 Plastics - Differential scanning calorimetry (DSC) Part 3. Le copolymère à blocs a une température de fusion Tf (de première chauffe : Tf1) inférieure à 180°C. L'utilisation de tels copolymères de Tf < 180°C dans la composition de l'invention permet d'obtenir, notamment par frittage, des objets tridimensionnels de flexibilité améliorée (module inférieur à 1000 MPa) par rapport aux pièces obtenues par frittage de poudres de polyamide 12 ou 11 par exemple.

Selon un mode de réalisation particulier de l'invention, le ratio en poids des blocs rigides sur les blocs souples du copolymère selon l'invention est inférieur à 0,7. Ceci permet l'obtention d'objets tridimensionnels de flexibilité encore meilleure, par exemple de module d'élasticité inférieur à 100 MPa et d'allongement à la rupture supérieur à 100%, mesuré selon la norme ISO 527-2:93-1BA.

Les charges pulvérulentes dans la composition selon l'invention ont une dureté Mohs inférieure à 6. En effet, des charges pulvérulentes de dureté Mohs supérieure ou égale à 6 seraient difficiles à mettre en oeuvre dans l'invention, en particulier leur broyage cryogénique ne serait pas possible et le dispositif de broyage serait endommagé. L'échelle de dureté Mohs est basée sur dix minéraux facilement disponibles. C'est une échelle ordinale, à partir de laquelle on procède par comparaison (capacité de l'un à rayer l'autre) avec deux autres minéraux dont on connaît déjà la dureté.

En outre, les charges pulvérulentes utilisées dans la présente invention ont un D50 inférieur à 20 µm. Il a été observé que les charges de D50 supérieur à 20 µm ont un impact négatif sur la coulabilité de la poudre dans les conditions usuelles de frittage laser.

Les charges pulvérulentes selon l'invention peuvent être d'origine minérale ou organique, et peuvent être mises en oeuvre seule(s) ou en mélange. Les charges utilisées dans les compositions selon la présente invention peuvent être de formes lamellaires, globulaires, sphériques, de fibres ou de toute autre forme intermédiaire entre ces formes définies. Les charges peuvent être ou non enrobées superficiellement, et en particulier elles peuvent être traitées en surface par des silicones, des acides aminés, des dérivés fluorés ou toute autre substance favorisant la dispersion et la compatibilité de la charge dans la composition.

Avantageusement, ladite au moins une charge est choisie parmi : les charges minérales carbonatées, le carbonate de calcium, le carbonate de magnésium, la dolomite, le calcite, le sulfate de baryum, le sulfate de calcium, la dolomie, le kaolin, le talc, le micromica, l'hydrate d'alumine, wollastonite, montmorillonite, zéolite, perlite; les nano-charges (charges de l'ordre du nanomètre), telles que les nano-argiles ou les nanotubes de carbone; les pigments, tels que le dioxyde de titane, notamment rutile ou anatase ; les oxydes de métaux de transition ; le graphite, le noir de carbone, la silice, d'alumine, le phosphate, le borate, le silicate ; les charges organiques, telles que les poudres de polymère, notamment celles de module supérieur à 1000 MPa. Les charges organiques pulvérulentes sont préférentiellement choisies parmi les poudres de polymères, copolymères, élastomères, thermoplastiques ou thermodurs, mis en oeuvre seuls ou en mélange.

Les charges minérales sont préférées car elles jouent généralement aussi un rôle de renfort dans la composition selon l'invention. De plus, les charges minérales permettent d'atteindre par cryobroyage la granulométrie voulue (D50 < 100 µm) pour la composition, plus facilement qu'avec des charges organiques. Avantageusement, ladite au moins une charge pulvérulente est une charge minérale de D50 inférieur à 10 µm. Avantageusement, ladite au moins une charge pulvérulente comprend du carbonate de calcium et /ou du carbonate de magnésium. De préférence, la composition selon l'invention comprend de la dolomie.

La (ou les) charge(s) pulvérulente(s) représente(nt) de 15 à 50% en poids de la composition selon l'invention. Une teneur en charge inférieure à 15% n'est pas suffisante pour diminuer la D50 de la poudre lors du cryobroyage. A l'inverse, une teneur en charge trop élevée, supérieure à 50% dans la composition, fait perdre les propriétés mécaniques élastomères du matériau final obtenu par frittage de la composition, en particulier l'allongement à la rupture du matériau devient inférieur à 100%. De préférence, ladite au moins une charge pulvérulente représente de 15 à 35% en poids, de préférence de 20 à 30% en poids, sur le poids total de la composition. Ces teneurs préférées en charges optimisent à la fois le D50 de la composition de poudre de l'invention, sa mise en oeuvre par frittage, ainsi que la densité et la définition de l'objet final, comme le montrent les exemples ci-après.

La composition de l'invention comprend en outre un agent d'écoulement en quantité suffisante (qui représente de 0,1 à 5% en poids de la composition) pour que la composition s'écoule et forme une couche plane, notamment lors d'un procédé de frittage couche par couche. L'agent d'écoulement est choisi parmi ceux couramment utilisés dans le domaine du frittage de poudres polymères. De préférence, cet agent d'écoulement est de forme sensiblement sphérique. Il est par exemple choisi parmi : les silices, les silices précipitées, les silices hydratées, les silices vitreuses, les silices fumées, les silices pyrogénées, les phosphates vitreux, les borates vitreux, les oxydes vitreux, l'alumine amorphe, le dioxyde de titane, le talc, le mica, le kaolin, l'attapulgite, les silicates de calcium, l'alumine et les silicates de magnésium. Les compositions selon l'invention peuvent bien entendu comprendre en outre tout type d'additif approprié pour les poudres polymères utilisées en frittage : notamment des additifs qui contribuent à améliorer les propriétés de la poudre pour son utilisation en technologie d'agglomération et/ou des additifs permettant d'améliorer les propriétés mécaniques (contrainte à la rupture et allongement à la rupture) ou esthétiques (couleur) des objets obtenus par fusion. La composition de l'invention peut notamment comprendre des colorants, des pigments pour la coloration, du TiO2, des pigments pour l'absorption infra rouge, du noir de carbone, des additifs anti-feu, des fibres de verre, des fibres de carbone, etc. Les compositions de l'invention peuvent contenir en outre au moins un additif choisi parmi les stabilisants anti-oxygène, les stabilisants à la lumière, les agents anti-chocs, les agents antistatiques, les agents ignifugeants, et leurs mélanges. Ces additifs sont sous forme de poudre de D50 inférieur à 20 µm. L'introduction de ces additifs au cours du procédé de fabrication de la composition de poudre selon l'invention permet d'améliorer leur dispersion et leur efficacité. Un procédé de frittage mettant en oeuvre une composition conforme à l'invention permet d'obtenir directement des pièces colorées sans opération ultérieure, de revêtement ou peinture.

La présente invention a également pour objet l'utilisation d'une composition de poudre thermoplastique telle que définie précédemment, dans un procédé de frittage pour fabriquer un objet de densité supérieure à 80% de la densité théorique définie comme la densité d'un objet de même forme fabriqué par un procédé d'injection de ladite composition.

La présente invention a notamment pour objet un procédé de fabrication d'un objet tridimensionnel de densité supérieure à 80% de la densité théorique, comprenant le frittage couche par couche d'une poudre de composition selon l'invention, ledit procédé ne comprenant pas d'étape ultérieure d'infiltration de matière dans ledit objet fabriqué par frittage.

De préférence, ledit procédé utilise le frittage laser (laser sintering).

La présente invention concerne un objet tridimensionnel susceptible d'être fabriqué selon le procédé décrit précédemment, ledit objet ayant une densité supérieure à 80% de la valeur théorique. Avantageusement, ledit objet ne comprend pas de matière infiltrée dans d'éventuelles lacunes ou porosités de l'objet. Avantageusement, l'objet selon l'invention présente un module élastique inférieur à 1000 MPa mesuré selon la norme ISO 527-2 : 93-1BA. Avantageusement, ledit objet tridimensionnel est un composant d'équipement sportif, de chaussure, de chaussure de sport, de semelle de chaussure, de décoration, de bagage, de lunettes, de mobilier, d'équipement audio-visuel, informatique, d'équipement automobile ou aéronautique et/ou un composant d'équipement médical.

### Exemples :

Les exemples ci-dessous illustrent la présente invention sans en limiter la portée. Dans les exemples, sauf indication contraire, tous les pourcentages et parties sont exprimés en poids.

Copolymères (Pebax® de Arkema) utilisés dans les compositions des essais (exemples et comparatifs) suivants :
Pebax 1 : Peba à base de blocs PA11 de Mn=600g/mol et de blocs PTMG de Mn=1000g/mol ; le ratio bloc dur/ bloc mou : 0,6.
Pebax 2 : Peba à base de blocs PA11 de Mn=1000g/mol et de blocs PTMG de Mn=1000g/mol ; le ratio bloc dur/ bloc mou : 1.
Pebax 3 : Peba à base de blocs PA12 de Mn=1000g/mol et de blocs PTMG de Mn=1000g/mol ; le ratio bloc dur/ bloc mou : 1.

Bien que les essais se réfèrent à une composition à base de PEBA (Pebax®), il est bien entendu que les compositions selon la présente invention ne se limitent pas à ce mode de réalisation, mais peuvent comprendre tout type de copolymère à blocs, seul ou en mélange.

La charge pulvérulente utilisée est la dolomie (fournisseur Imerys): Carbonate double de calcium et de magnésium, de composition chimique CaMg(CO₃)₂. Sa dureté Mohs est 3. Son D50 est inférieur à 10 µm.

La quantité de charge utilisée (% en poids) varie selon les compositions des exemples et comparatifs (de 0 à 30% , voir tableau 2).

L'agent d'écoulement utilisé dans tous les essais suivants est la silice fumée CabOSil TS610 (fournisseur Cabot Corporation), il représente 0,2% en poids dans chaque composition. Son D50 est inférieur à 20 µm.

### Exemples 1 à 4 et Comparatifs 1 à 3

Fabrication des compositions des essais du tableau 2 :

### Compoundage :

Dans les essais du tableau 2 qui comprennent la charge pulvérulente (comparatif 3, exemples 1, 2, 3, 4), des granulés de Pebax 1, 2 ou 3 sont compoundés par extrusion (appareillage Werner 40) avec une quantité de charge (respectivement 10, 20, 30% et 22% de dolomie).

### Cryobroyage :

Le Pebax 1 (comparatif 1 ou 2) ou le Pebax 2 (comparatif 4), ou le compound obtenu précédemment (comparatif 3 et exemples 1 à 4) est cryobroyé pour viser la fabrication d'une poudre de D50 < 100 µm (cryobroyeur Mikropul D2H, broyeur à marteaux, caractéristiques : Vitesse moteur : 2930tr/min, Diamètre poulie broyeur : 115 mm, Diamètre poulie moteur : 270 mm, Vitesse broyeur : 6870 tr/min à vide, Vitesse moteur des double vis : 1360 tr/ min, Rapport de réduction des doubles vis : 1/10, Diamètre des doubles vis : 78mm, Pas des doubles vis : 50mm).

Après cryobroyage, les poudres peuvent être éventuellement séchées dans une étuve (Heraeus, Jouanin) à cylindre rotatif (température de 60°C, pression de 20-25 mbar) pendant 8 heures.

### Tamisage :

Après cryobroyage, les poudres sont tamisées afin de retirer les grosses particules et diminuer la taille moyenne et le D50 des particules (tamiseur Perflux, toile métallique en inox dont les mailles sont de 200 µm dans tous les essais, de 145 µm pour le tamisage supplémentaire du comparatif 2 uniquement, et de 110 µm pour l'exemple 4.

### Mesure du rendement de tamisage:

Le rendement représente le ratio (en pourcentage) entre la quantité (en poids) de poudre cryobroyée passée à travers les mailles du tamis sur la quantité de poudre engagée.

La poudre obtenue après cryobroyage, et tamisage est ensuite additivée avec 0,2% en poids de silice fumée (Cab-O-Sil TS610).

### Passage des compositions obtenues en machine pour frittage :

On utilise une machine Laser Sintering Formiga P100 (EOS).

Les conditions de passage en machine laser qui sont fixes et cominunes à toutes les compositions sont : vitesse du contour = 1500 mm/s, vitesse du hachurage = 2500 mm/ s, hachurage' déplacement du rayon' = 0.15 mm.

Les conditions qui varient selon les essais du tableau 2 sont indiquées dans le tableau 1 suivant :

**Tableau 1**

| | Température chambre d'exposition (°C) | Température chambre de retrait (°C) | Puissance laser du contour (Watt) | Puissance laser hachurage (Watt) |
|---|---|---|---|---|
| Comparatif 1 | 105 | 80 | 13 | 19 |
| Comparatif 2 | 105 | 80 | 13 | 19 |
| Comparatif 3 | 98 | 80 | 13 | 19 |
| Exemple 1 | 98 | 80 | 13 | 19 |
| Exemple 2 | 98 | 80 | 13 | 19 |
| Comparatif 4 | 127 | 105 | 12 | 18 |
| Exemple 3 | 120 | 99 | 12 | 18 |
| Exemple 4 | 120 | 99 | 12 | 18 |

Les pièces fabriquées par frittage des différentes compositions sont, dans tous les essais, des éprouvettes de traction qui sont des haltères de dimension 150*25*3 mm.

### Aspect de surface des objets 3D obtenus:

Dans la colonne « Aspect de surface » du tableau 2, « OK » correspond à un aspect de surface régulier, lisse et homogène avec des arêtes précises. « KO » correspond à un aspect inverse : notamment un aspect de surface dégradé.

### Mesure de la densité des objets tridimensionnels (éprouvettes) obtenus:

La densité réelle de chaque éprouvette formée par laser sintering est mesurée selon la norme ISO 1183, et comparée à la densité théorique de l'éprouvette correspondante de même forme, de même composition mais fabriquée par injection. Le rapport densité réelle/densité théorique dans le tableau 2 indique si la pièce obtenue par laser sintering a une densité inférieure ou supérieure à 80% de la densité théorique.

### Mesure du module d'élasticité (Module en traction) des haltères obtenus par frittage :

Le module en traction est mesuré selon la norme ISO 527-2:93-1B.

On obtient pour tous les essais un module inférieur à 1000 MPa.

Le rendement de tamisage, la granulométrie de la poudre mise en oeuvre par frittage, l'aspect de surface, le ratio densité réelle/densité théorique et le module des objets 3D obtenus sont résumés dans le tableau 2 suivant.

**Tableau 2**

| | Copolymère à blocs | % Charge (Dolomie | Rendement du tamisage (<200 µm) après cryobroyage | Granulométrie (D50) | Aspect de surface | densité réelle /densité théorique | Module en traction (MPa) |
|---|---|---|---|---|---|---|---|
| Comparatif 1 | Pebax 1 | 0% | >50% | 105 µm | KO | <80% | <1000 |
| Comparatif 2 | | 0% | < 50 % après tamisage supplémentaire (< 145 µm) | 80 µm | OK | >80% | <100 |
| Comparatif 3 | | 10% | >50 % | 104 µm | KO | <80 % | <100 |
| Exemple 1 | | 20% | >50 % | 84 µm | OK | >80 % | <100 |
| Exemple 2 | | 30% | >50 % | 69 µm | OK | >80 % | <100 |
| Comparatif 4 | Pebax 2 | 0% | >50 % | 114 µm | KO | <80 % | <1000 |
| Exemple 3 | | 22% | >50 % | 61 µm | OK | >80 % | <1000 |
| Exemple 4 | Pebax 3 | 22% | >50 % | 70 µm | OK | 90 % | >100 et <1000 |

### Comparatif 1

Des granulés de polymère Pebax 1 (de ratio blocs rigides/blocs mous : 0,6 et de température de fusion de première chauffe Tf1 : 146°C) sont cryobroyés et tamisés à 200 µm. La poudre obtenue est ensuite additivée avec 0,2% en poids d'agent d'écoulement (silice fumée Cab-O-Sil TS610). La composition de poudre, de D50 égal à 105 µm, est mise en oeuvre par frittage laser (machine laser Formiga P100) pour construire des pièces tridimensionnelles (éprouvettes de traction). Les pièces obtenues ont une densité inférieure à 80% de la densité théorique, un aspect de surface irrégulier et une définition des arêtes imprécise.

### Comparatif 2

Des granulés de polymère Pebax 1 (de ratio blocs rigides/blocs mous : 0,6 et de température de fusion de première chauffe Tf1 : 146°C) sont cryobroyés et tamisés à 200 µm puis tamisés à 145 µm. La poudre obtenue est ensuite additivée avec 0,2% en poids d'un agent d'écoulement (silice fumée Cab-O-Sil TS610). La poudre, de D50 égal à 80 µm, est mise en oeuvre par frittage laser (machine laser Formiga P100) pour construire des pièces tridimensionnelles (éprouvettes de traction). Les pièces obtenues ont une densité supérieure à 80% de la densité théorique, un aspect de surface régulier, lisse, homogène et des arêtes précises. Mais le rendement du cryobroyage (inférieur à 50%) en poudre de D50 inférieur à 100 µm n'est pas viable industriellement. La composition de poudre du comparatif 2 ainsi cryobroyée nécessite deux étapes de tamisage, qui entraînent une perte de plus de 50% (« refus de tamis » supérieur à 50%) de la poudre issue du cryobroyage.

### Comparatif 3

Des granulés de polymère Pebax 1 (de ratio blocs rigides/blocs mous : 0,6 et de température de fusion de première chauffe Tf1 : 146°C) sont compoundés avec 10% en poids de charge minérale (Dolomie). Le compound obtenu est cryobroyé et tamisé à 200 µm. La poudre obtenue est ensuite additivée avec 0,2% en poids d'agent d'écoulement (silice fumée Cab-O-Sil TS610). La composition de poudre, de D50 égal à 104 µm, est mise en oeuvre par frittage laser (machine laser Formiga P100) pour construire des pièces tridimensionnelles (éprouvettes de traction). Les pièces obtenues ont une densité inférieure à 80% de la densité théorique, un aspect de surface irrégulier et une définition des arêtes imprécise.

### Exemple 1

Des granulés de polymère Pebax 1 (de ratio blocs rigides/blocs mous : 0,6 et de température de fusion de première chauffe Tf1 : 146°C) sont compoundés avec 20% en poids d'une charge minérale (Dolomie). Le compound obtenu est cryobroyé et tamisé à 200 µm. La poudre obtenue est ensuite additivée avec 0,2% en poids d'agent d'écoulement (silice fumée Cab-O-Sil TS610). La composition de poudre, de D50 égal à 84 µm, est mise en oeuvre par frittage laser (machine laser Formiga P100) pour construire des pièces tridimensionnelles (éprouvettes de traction). Les pièces obtenues ont une densité supérieure à 80% de la densité théorique, un aspect de surface régulier, lisse, homogène et des arêtes précises.

### Exemple 2

Des granulés de polymère Pebax 1 (de ratio blocs rigides/blocs mous : 0,6 et de température de fusion de première chauffe Tf1 : 146°C) sont compoundés avec 30% en poids de charge minérale (Dolomie). Le compound obtenu est cryobroyé et tamisé à 200 µm. La poudre obtenue est ensuite additivée avec 0,2% en poids d'un agent d'écoulement (silice fumée Cab-O-Sil TS610). La composition de poudre, de D50 égal à 69 µm, est mise en oeuvre par frittage laser (machine laser Formiga P100) pour construire des pièces tridimensionnelles (éprouvettes de traction). Les pièces obtenues ont une densité supérieure à 80% de la densité théorique, un aspect de surface régulier, lisse, homogène et des arêtes précises.

### Comparatif 4

Des granulés de polymère Pebax 2 (de ratio blocs rigides/blocs mous: 1 et de température de fusion de première chauffe Tf1: 148°C) sont cryobroyés et tamisés à 200 µm. La poudre obtenue est ensuite additivée avec 0,2% en poids d'un agent d'écoulement (silice fumée Cab-O-Sil TS610). La composition de poudre, de D50 égal à 114 µm, est mise en oeuvre par frittage laser (machine laser Formiga P100) pour construire des pièces tridimensionnelles (éprouvettes de traction). Les pièces obtenues ont une densité inférieure à 80% de la densité théorique et un aspect de surface irrégulier et une définition des arêtes imprécise.

### Exemple 3

Des granulés de polymère Pebax 2 (de ratio blocs rigides/blocs mous : 1 et de température de fusion de première chauffe Tf1: 148°C) sont compoundés avec 22% en poids de charge minérale (Dolomie). Le compound obtenu est cryobroyé et tamisé à 200 µm. La poudre obtenue est ensuite additivée avec 0,2% en poids d'agent d'écoulement (silice fumée Cab-O-Sil TS610). La composition de poudre, de D50 égal à 61 µm, est mise en oeuvre par frittage laser (machine laser Formiga P100) pour construire des pièces tridimensionnelles (éprouvettes de traction). Les pièces obtenues ont une densité supérieure à 80% de la densité théorique, un aspect de surface régulier, lisse et homogène et des arêtes précises.

### Exemple 4

Des granulés de polymère Pebax 3 (de ratio blocs rigides/blocs mous : 1, et de tempéraure de fusion de première chauffe Tf1: 147°C) sont compoundés avec 22% en poids d'une charge minérale (Dolomie). Le compound obtenu est cryobroyé et tamisé (tamis de 110 µm). La poudre obtenue est ensuite additivée avec 0,2% en poids d'agent d'écoulement (silice fumée Cab-O-Sil TS610). Un pigment minéral est également ajouté (0,3% de Noir Monarch 120). La composition de poudre, de D50 égal à 70 µm, est mise en oeuvre par frittage laser (machine laser Formiga P100) pour construire des pièces tridimensionnelles (éprouvettes de traction). Les pièces obtenues ont une densité de 90% de la densité théorique, un aspect de surface régulier, lisse et homogène et des arêtes précises.

La mise en oeuvre d'une composition de poudre selon l'invention dans les exemples 1 à 4, par un procédé de frittage laser permet d'obtenir directement des pièces flexibles, de bonne définition et de densité supérieure à 80% de la valeur théorique, sans aucune opération ultérieure (type infiltration).

## Revendications

1. Composition de poudre thermoplastique de D50 inférieure à 100 µm, comprenant :
- au moins un copolymère à blocs de température de fusion inférieure à 180°C ;
- de 15 à 50% en poids d'au moins une charge pulvérulente de dureté Mohs inférieure à 6 et de D50 inférieur à 20 µm; et
- de 0,1 à 5% d'un agent d'écoulement pulvérulent de D50 inférieur à 20 µm; sur le poids total de la composition.

2. Composition selon la revendication 2, dans laquelle ledit au moins un copolymère à blocs comprend au moins un bloc choisi parmi : les blocs polyéther, les blocs polyester, les blocs polyamide, les blocs polyuréthane, et leurs mélanges.

3. Composition selon la revendication 1 ou 2, dans laquelle ledit au moins un copolymère comprend un copolymère à blocs polyamide et blocs polyéther.

4. Composition selon l'une quelconque des revendications 1 à 3, dans laquelle l'agent d'écoulement est choisi parmi : les silices, les silices hydratées, l'alumine amorphe, les silices vitreuses, les phosphates vitreux, les borates vitreux, les oxydes vitreux, le dioxyde de titane, le talc, le mica, les silices fumées, les silices pyrogénées, le kaolin, l'attapulgite, les silicates de calcium, l'alumine et les silicates de magnésium.

5. Composition selon l'une quelconque des revendications 1 à 4, dans laquelle ladite au moins une charge pulvérulente est choisie parmi: les charges minérales carbonatées, le carbonate de calcium, le carbonate de magnésium, la dolomite, le calcite, le sulfate de baryum, le sulfate de calcium, la dolomie, le kaolin, le talc, le micromica, l'hydrate d'alumine, wollastonite, montmorillonite, zéolite, perlite, les nano-charges, les nano-argiles, les nano-tubes de carbone, les pigments, tels que le dioxyde de titane, notamment rutile ou anatase; les oxydes de métaux de transition; le graphite, le noir de carbone, la silice, d'alumine, le phosphate, le borate, le silicate, les charges organiques, les poudres de polymère, les poudres de polymère de module supérieur à 1000 MPa.

6. Composition selon l'une quelconque des revendications 1 à 5, dans laquelle ladite au moins une charge pulvérulente est une charge minérale de D50 inférieur à 10 µm.

7. Composition selon l'une quelconque des revendications 1 à 6, dans laquelle ladite au moins une charge pulvérulente comprend du carbonate de calcium et /ou du carbonate de magnésium.

8. Composition selon l'une quelconque des revendications 1 à 7, dans laquelle ladite au moins une charge représente de 15 à 35% en poids, de préférence de 20 à 30% en poids, sur le poids total de la composition.

9. Composition selon l'une quelconque des revendications 1 à 8, dans laquelle ledit au moins un copolymère à blocs comprend des blocs souples et des blocs rigides, le ratio en poids des blocs rigides sur les blocs souples étant inférieur à 0,7.

10. Procédé de fabrication d'une composition de poudre conforme à l'une quelconque des revendications 1 à 9, comprenant les étapes suivantes :
a) mélange par compoundage dudit au moins un copolymère à blocs avec ladite au moins une charge ;
b) cryobroyage du mélange obtenu en a) pour obtenir une poudre de D50 inférieur à 100 µm avec un rendement supérieur à 50 % ; puis
c) ajout de l'agent d'écoulement à la poudre obtenue en b).

11. Utilisation d'une composition de poudre thermoplastique selon l'une quelconque des revendications 1 à 9, dans un procédé de frittage pour fabriquer un objet tridimensionnel de densité supérieure à 80 % de la densité théorique définie comme la densité d'un objet de même forme fabriqué par un procédé d'injection de ladite composition.

12. Utilisation de 15 à 50% en poids de charge de dureté Mohs inférieure à 6 et de D50 inférieur à 20 µm dans une poudre thermoplastique de D50 inférieur à 100 µm qui comprend au moins un copolymère à blocs pour fabriquer, par frittage de la composition de poudre ainsi obtenue, un objet tridimensionnel de densité supérieure à 80% de la densité théorique définie comme la densité d'un objet de même forme fabriqué par injection de la même composition.

13. Procédé de fabrication d'un objet tridimensionnel de densité supérieure à 80% de la densité théorique, comprenant le frittage couche par couche d'une poudre de composition conforme à l'une quelconque des revendications 1 à 9, ledit procédé ne comprenant pas d'étape ultérieure d'infiltration de matière dans ledit objet fabriqué par frittage.

14. Objet tridimensionnel flexible susceptible d'être fabriqué selon le procédé de la revendication 13, ledit objet ayant une densité supérieure à 80% de la densité théorique.

15. Objet selon la revendication 14, **caractérisé en ce qu'**il ne comprend pas de matière infiltrée dans d'éventuelles lacunes de l'objet.

16. Objet selon la revendication 14 ou 15, présentant un module élastique inférieur à 1000 MPa mesuré selon la norme ISO 527-2 : 93-1BA.

17. Objet selon l'une des revendications 14 à 16, ledit objet étant un composant d'équipement sportif, de chaussure, de chaussure de sport, de semelle de chaussure, de décoration, de bagage, de lunettes, de mobilier, d'équipement audio-visuel, informatique, d'équipement automobile ou aéronautique et/ou un composant d'équipement médical.

## Patentansprüche

1. Thermoplastische Pulverzusammensetzung mit D50 kleiner als 100 µm, welche umfasst:
- mindestens ein Blockcopolymer mit einer Schmelztemperatur unter 180 °C;
- 15 bis 50 Gew.-% mindestens eines pulverförmigen Füllstoffes mit einer Mohs-Härte kleiner als 6 und mit D50 kleiner als 20 µm; und
- 0,1 bis 5 % eines pulverförmigen Fließmittels mit D50 kleiner als 20 µm; bezogen auf das Gesamtgewicht der Zusammensetzung.

2. Zusammensetzung nach Anspruch 1, wobei das mindestens eine Blockcopolymer mindestens einen Block umfasst, der ausgewählt ist aus: Polyetherblöcken, Polyesterblöcken, Polyamidblöcken, Polyurethanblöcken und deren Gemischen.

3. Zusammensetzung nach Anspruch 1 oder 2, wobei das mindestens eine Copolymer ein Copolymer mit Polyamidblöcken und Polyetherblöcken umfasst.

4. Zusammensetzung nach einem der Ansprüche 1 bis 3, wobei das Fließmittel ausgewählt ist aus: Siliciumdioxiden, hydratisierten Siliciumdioxiden, amorphen Aluminiumoxid, glasartigen Siliciumdioxiden, glasartigen Phosphaten, glasartigen Boraten, glasartigen Oxiden, Titandioxid, Talk, Glimmer, Rauchquarzen, pyrogenen Siliciumdioxiden, Kaolin, Attapulgit, Calciumsilicaten, Aluminiumoxid und Magnesiumsilicaten.

5. Zusammensetzung nach einem der Ansprüche 1 bis 4, wobei der mindestens eine pulverförmige Füllstoff ausgewählt ist aus: carbonathaltigen mineralischen Füllstoffen, Calciumcarbonat, Magnesiumcarbonat, Dolomit, Calcit, Bariumsulfat, Calciumsulfat, Dolomitstein, Kaolin, Talk, Mikroglimmer, Tonerdehydrat, Wollastonit, Montmorillonit, Zeolith, Perlit, Nanofüllstoffen, Nanotonen, Kohlenstoffnanoröhren, Pigmenten, wie Titandioxid, insbesondere Rutil oder Anatas; Oxiden von Übergangsmetallen; Graphit, Riß, Siliciumdioxid, Aluminiumoxid, Phosphat, Borat, Silicat, organischen Füllstoffen, Polymerpulvern, Polymerpulvern mit einem Modul von über 1000 MPa.

6. Zusammensetzung nach einem der Ansprüche 1 bis 5, wobei der mindestens eine pulverförmige Füllstoff ein mineralischer Füllstoff mit D50 kleiner als 10 µm ist.

7. Zusammensetzung nach einem der Ansprüche 1 bis 6, wobei der mindestens eine pulverförmige Füllstoff Calciumcarbonat und/oder Magnesiumcarbonat umfasst.

8. Zusammensetzung nach einem der Ansprüche 1 bis 7, wobei auf den mindestens einen Füllstoff 15 bis 35 Gew.-%, vorzugsweise 20 bis 30 Gew.-% des Gesamtgewichtes der Zusammensetzung entfallen.

9. Zusammensetzung nach einem der Ansprüche 1 bis 8, wobei das mindestens eine Blockcopolymer flexible Blöcke und starre Blöcke umfasst, wobei des Gewichtsverhältnis der starren Blöcke zu den flexiblen Blöcken kleiner als 0,7 ist.

10. Verfahren zur Herstellung einer Pulverzusammensetzung nach einem der Ansprüche 1 bis 9, welches die folgenden Schritte aufweiset:
a) Mischung durch Compoundierung des mindestens einen Blockcopolymers mit dem mindestens einen Füllstoff;
b) kryogene Zerkleinerung des in a) erhaltenen Gemisches, um ein Pulver mit D50 kleiner als 100 µm zu erhalten, mit einem Wirkungsgrad von über 50 %; danach
c) Zugabe des Fließmittels zu dem in b) erhaltenen Pulver.

11. Verwendung einer thermoplastischen Pulverzusammensetzung nach einem der Ansprüche 1 bis 9 in einem Sinterverfahren, um ein dreidimensionales Objekt mit einer Dichte von über 80 % der theoretischen Dichte herzustellen, welche als die Dichte eines Objekts derselben Form definiert ist, das durch ein Verfahren des Spritzens derselben Zusammensetzung hergestellt wurde.

12. verwerdung von 15 bis 50 Gew.-% eines Füllstoffes mit einer Mohs-Härte kleiner als 6 und mit D50 kleiner als 20 µm in einem thermoplastischen Pulver mit D50 kleiner als 100 µm, welches mindestens ein Blockcopolymer umfasst, um durch Sinterung der so erhaltenen Pulverzusammensetzung ein dreidimensionales Objekt mit einer Dichte von über 80 % der theoretischen Dichte herzustellen, welche als die Dichte eines Objekts derselben Form definiert ist, das durch Spritzen derselben Zusammensetzung hergestellt wurde.

13. Verfahren zur Herstellung eines dreidimensionalen Objekts mit einer Dichte von über 80 % der theoretischen Dichte, welches die schichtweise Sinterung eines Pulvers mit einer Zusammensetzung nach einem der Ansprüche 1 bis 9 umfasst, wobei das vorfahren keinen späteren Schrift des Einbringens von Material in das durch Sinterung hergestellte Objekt umfasst.

14. Flexibles dreidimensionales Objekt, das mittels des Verfahrens nach Anspruch 13 herstellbar ist, wobei das Objekt eine Dichte von über 80 % der theoretischen Dichte aufweist.

15. Objekt nach Anspruch 14, **dadurch gekennzeichnet, dass** es kein Material umfasst, das in eventuelle Hohlräume des Objekts eingebracht ist.

16. Objekt nach Anspruch 14 oder 15, welches einen Elastizitätsmodul von weniger als 1000 MPa aufweist, gemessen nach der Norm ISO 527-2:93-1BA.

17. Objekt nach einem der Ansprüche 14 bis 16, wobei das Objekt ein Bestandteil eines Sportgeräts, eines Schuhs, eines Turnschuhs, einer Schuhsohle, einer Dekoration, eines Gepäckstücks, einer Brille, von Mobiliar, einer audiovisuellen Einrichtung, von Informationstechnik, von Automobil- oder Luftfahrzeugausrüstung und/oder ein Bestandteil von medizinischer Ausrüstung ist.

## Claims

1. Thermoplastic powder composition having a D50 of less than 100 µm, comprising:
- at least one block copolymer having a melting temperature below 180°C;
- from 15 to 50% by weight of at least one pulverulent filler having a Mohs hardness of less than 6 and having a D50 of less than 20 µm; and
- from 0.1 to 5% of a pulverulent flow agent having a D50 of less than 20 µm; out of the total weight of the composition.

2. Composition according to Claim 2, in which said at least one block copolymer comprises at least one block chosen from: polyether blocks, polyester blocks, polyamide blocks, polyurethane blocks, and mixtures thereof.

3. Composition according to Claim 1 or 2, in which said at least one copolymer comprises a copolymer having polyamide blocks and polyether blocks.

4. Composition according to any one of Claims 1 to 3, in which the flow agent is chosen from: silicas, hydrated silicas, amorphous alumina, vitreous silicas, vitreous phosphates, vitreous borates, vitreous oxides, titanium dioxide, talc, mica, fumed silicas, pyrogenic silicas, kaolin, attapulgite, calcium silicates, alumina and magnesium silicates.

5. Composition according to any one of Claims 1 to 4, in which said at least one pulverulent filler is chosen from: carbonate-based mineral fillers, calcium carbonate, magnesium carbonate, dolomite, calcite, barium sulphate, calcium sulphate, dolomite, kaolin, talc, micro-mica, alumina hydrate, wollastonite, montmorillonite, zeolite, perlite, nanofillers, nanoclays, carbon nanotubes, pigments, such as titanium dioxide, especially rutile or anatase titanium dioxide; transition metal oxides; graphite, carbon black, the silica, alumina, phosphate, borate, silicate, organic fillers, polymer powders, polymer powders having a modulus greater than 1000 MPa.

6. Composition according to any one of Claims 1 to 5, in which said at least one pulverulent filler is a mineral filler having a D50 of less than 10 µm.

7. Composition according to any one of Claims 1 to 6, in which said at least one pulverulent filler comprises calcium carbonate and/or magnesium carbonate.

8. Composition according to any one of Claims 1 to 7, in which said at least one filler represents from 15 to 35% by weight, preferably from 20 to 30% by weight, out of the total weight of the composition.

9. Composition according to any one of Claims 1 to 8, in which said at least one block copolymer comprises soft blocks and hard blocks, the ratio by weight of the hard blocks to the soft blocks being less than 0.7.

10. Process for manufacturing a powder composition according to any one of Claims 1 to 9, comprising the following steps:
a) mixing, by compounding, of said at least one block copolymer with said at least one filler;
b) cryomilling of the mixture obtained in a) in order to obtain a powder having a D50 of less than 100 µm with a yield of greater than 50%; then
c) adding the flow agent to the powder obtained in b).

11. Use of a thermoplastic powder composition according to any one of Claims 1 to 9, in a sintering process in order to manufacture a three-dimensional article having a density greater than 80% of the theoretical density defined as the density of an article of the same shape manufactured by a process of injection moulding said composition.

12. Use of 15 to 50% by weight of filler having a Mohs hardness of less than 6 and having a D50 of less than 20 µm in a thermoplastic powder having a D50 of less than 100 µm which comprises at least one block copolymer in order to manufactured, by sintering of the powder composition thus obtained, a three-dimensional article having a density greater than 80% of the theoretical density defined as the density of an article of the same shape manufactured by injection moulding the same composition.

13. Process for manufacturing a three-dimensional article having a density greater than 80% of the theoretical density, comprising the layer-by-layer sintering of a powder having a composition according to any one of Claims 1 to 9, said process not comprising a subsequent step of infiltration of material into said article manufactured by sintering.

14. Flexible three-dimensional article capable of being manufactured according to the process of Claim 13, said article having a density greater than 80% of the theoretical density.

15. Article according to Claim 14, **characterized in that** it does not comprise material infiltrated into possible gaps in the article.

16. Article according to Claim 14 or 15, having an elastic modulus of less than 1000 MPa. measured according to the standard ISO 527-2: 93-1BA.

17. Article according to one of Claims 14 to 16, said article being a component of sports equipment, of a shoe, of a sports shoe, of a shoe sole, of decorations, of luggage, of spectacles, of furniture, of audiovisual equipment, of a computer, of motor vesicle or aeronautic equipment and/or a component of medical equipment.
